(19) Europäisches Patentamt
European Patent Office
Office européen des brevets

(11) **EP 0 818 372 B1**

(12) **EUROPÄISCHE PATENTSCHRIFT**

(45) Veröffentlichungstag und Bekanntmachung des Hinweises auf die Patenterteilung:
**23.10.2002 Patentblatt 2002/43**

(51) Int Cl.⁷: **B60T 8/00**

(21) Anmeldenummer: **97111295.8**

(22) Anmeldetag: **04.07.1997**

(54) **System für die Antriebs- und Bremssteuerung eines Schienenfahrzeuges**

System for controlling the traction and the braking of a railway vehicle

Système pour la commande de traction et de freinage d'un véhicule sur rail

(84) Benannte Vertragsstaaten:
**AT CH DE FR GB IT LI**

(30) Priorität: **10.07.1996 DE 19627731**

(43) Veröffentlichungstag der Anmeldung:
**14.01.1998 Patentblatt 1998/03**

(73) Patentinhaber: **DaimlerChrysler AG**
**70567 Stuttgart (DE)**

(72) Erfinder: **Weinhardt, Michael, Dr.**
**68309 Mannheim (DE)**

(74) Vertreter: **Akers, Noel James**
**Howrey Simon Arnold & White,**
**City Point,**
**One Ropemaker Street**
**London EC2Y 9HS (GB)**

(56) Entgegenhaltungen:
**DE-A- 4 333 281**     **GB-A- 2 116 657**

**Beschreibung**

Die Erfindung bezieht sich auf ein System für die Antriebs- und Bremsensteuerung eines Schienenfahrzeuges gemäß dem Oberbegriff des Anspruchs 1.

Ein derartiges System für die Antriebs- und Bremsensteuerung eines Schienenfahrzeuges ist aus der DE 43 33 281 A1 bekannt. Dort wird ein Verfahren zur Regelung der Antriebs- und/oder Bremskraft der Räder eines Fahrzeuges auf optimalen Kraftschluss beschrieben, bei dem die Räder eng um das Maximum der Kraftschluss-Schlupf-Charakteristik des Rad-Schiene-Kontaktes pendelnd geführt werden. Dies erfolgt entweder durch fortgesetztes Steigern und Wiederzurücknehmen der Antriebs-/Bremskraft, wobei das Überschreiten des Maximums der Kraftschluss-Schlupf-Charakteristik, d. h. der Übergang in den instabilen Schlupfbereich durch einsetzende stärkere Beschleunigung/Verzögerung erkannt wird, oder durch Steigern und Zurücknehmen der Beschleunigung für eine eingeprägte Drehzahl, wobei das Überschreiten des Maximums der Kraftschluss-Schlupf-Charakteristik, d. h. der Übergang in den instabilen Schlupfbereich am Absinken der Antriebs-/Bremskraft erkannt wird.

Dabei wird jeweils nur ein Teil der Räder/Radsätze des Fahrzeuges auf optimalen Kraftschluss geregelt, während die übrigen einer gewollten Radschlupfregelung unterliegen, wobei die gemessene Radgeschwindigkeit/-Drehzahl an den Rädern/Radsätzen mit optimalem Kraftschluss als Referenzgeschwindigkeit dient, auf die nach Addition eines gewollten Schlupfbetrages die Radgeschwindigkeit/Drehzahl der übrigen Räder/Radsätze geregelt wird.

Die Räder eines schienengebundenen Fahrzeuges unterliegen vielfältigen Beanspruchungen. Analog zu den Teilfunktionen des Rades, nämlich Tragen, Führen und Antreiben bzw. Bremsen können diesbezügliche Teilbeanspruchungen unterschieden werden. Bei den Teilfunktionen Tragen und Führen treten im wesentlichen mechanische Beanspruchungen auf, die bei der Gestaltung des Laufwerkes hinreichend genau bekannt sind, so dass in der Regel durch sorgfältige konstruktive Gestaltung und Materialauswahl eine ausreichende Sicherheit gegen Überbeanspruchungen gewährleistet ist.

Anders verhält es sich mit den Beanspruchungen, die aus der Teilfunktion Antreiben bzw. Bremsen resultieren. Bei ausreichend hohen Kraftschlusswerten zwischen Rad und Schiene sind die Zug- bzw. Bremskräfte durch die Leistungsfähigkeit der Antriebs- bzw. Bremsanlage begrenzt. Dann treten nur geringe Radschlupfwerte auf. Sind die Kraftschlusswerte jedoch niedriger, werden die übertragbaren Zug- bzw. Bremskräfte der Räder durch die Kraftschlusswerte begrenzt. Dann können erheblich größere Radschlupfwerte auftreten und es können sich thermische und mechanische Überbeanspruchungen der Radlauffläche und des Radkranzes ergeben.

Die thermische Beanspruchung des Rades ergibt sich im wesentlichen aus zwei Quellen, der Schlupfleistung in der Kontaktzone Rad/Schiene und bei klotzgebremsten Rädern aus dem Wärmeeintrag der Bremsklötze.

Die Schlupfleistung ergibt sich aus dem Produkt von Tangentialkraft und Schlupfgeschwindigkeit, dabei wird vorausgesetzt, daß die Richtungen dieser beiden Größen immer hinreichend genau übereinstimmen. Die Schlupfgeschwindigkeit ist das Produkt aus Radschlupf und Fahrgeschwindigkeit, wobei Einflüsse aus Schwingungen im Fahrwerk in erster Näherung vernachlässigbar sind.

Der Wärmeeintrag durch Schlupfleistung verteilt sich auf das Rad und die Schiene, wobei Zwischenschichten zwischen Rad und Schiene der Schiene zugerechnet werden. Die zugeführten Wärmemengen werden im wesentlichen durch Konvektion an die Umgebungsluft abgegeben. Die abgeführten Wärmemengen sind dabei von der Umgebungstemperatur und besonders von der Fahrgeschwindigkeit abhängig. Im stationären Zustand stellt sich eine bestimmte Wärmemengenaufteilung zwischen Rad und Schiene sowie eine typische Temperaturverteilung innerhalb des Rades und in der Schiene ein.

Der Wärmeeintrag durch eine Klotzbremse ergibt sich aus den Tangentialkräften der Bremsklötze und der Radumfangsgeschwindigkeit. Auch hier stellt sich eine Aufteilung der Wärmemenge auf Rad und Bremsklötze ein. Die für das Abschmelzen von Bremsklotzmaterial aufgenommene Wärmemenge wird dabei dem Bremsklotz zugerechnet. Im stationären Zustand stellt sich auch hier, eine bestimmte Wärmemengenaufteilung zwischen Rad und Bremsklotz sowie eine typische Temperaturverteilung innerhalb des Rades ein.

Der Wärmeeintrag durch eine Klotzbremse läßt sich zumindest experimentell genügend genau bestimmen. Dadurch kann mit einer darauf abgestimmten Auslegung der Bremsanlage, konstruktiven Gestaltung des Rades und geeigneten Materialauswahl eine gewisse Sicherheit gegen Überbeanspruchungen des Rades erreicht werden. Allerdings können durch Störungen der Bremsanlage, beispielsweise feste Bremsen, ungleiche Aufteilung der Bremswirkung im Zug, lang andauernde Gefällebremsungen auch dann noch Überbeanspruchungen der Räder auftreten.

In einer konkreten Betriebssituation ist der Wärmeeintrag durch eine Klotzbremse nicht frei wählbar, weil dem sicherheitstechnische Belange entgegenstehen. So kann zwar die Höhe des Wärmeeintrages durch Reduzierung der Bremswirkung gesenkt werden, jedoch kann zur Einhaltung eines vorgegebenen Bremsweges eine solche Reduktion überhaupt nicht in Frage kommen.

Der Wärmeeintrag durch Schlupfleistung ist im wesentlichen vom Kraftschluß- und Radschlupfverhalten bestimmt. Die Höhe des jeweiligen Kraftschlusses Rad/Schiene ist von vielfältigen Einflüssen bestimmt, kann deshalb in weiten Grenzen variieren und ist praktisch nicht vorherbestimmbar. Das Radschlupfverhalten wird durch den Kraftschluß und sofern vorhanden durch eine Radschlupf-Regeleinrichtung bestimmt.

In einer konkreten Betriebssituation kann der Wärmeeintrag durch Schlupfleistung durch den jeweiligen Radschlupf beeinflußt werden. Durch Reduzierung der Schlupfgeschwindigkeit des Rades kann auch die Schlupfleistung verringert werden. Falls damit auch eine Reduktion der übertragbaren Tangentialkraft verbunden ist, muß dies nur für sicherheitsrelevante Bremsungen mittels spezieller Messungen auf Einhaltung der diesbezüglich geltenden maximalen Bremswegverlängerungen überprüft und abgesichert werden.

Dagegen stehen einer Reduzierung der Schlupfgeschwindigkeit des Rades im Fahrbetrieb, also bei Zugkraftausübung, keine widersprechenden, sicherheitsrelevanten Forderungen entgegen. Im Gegenteil, gerade bei Triebfahrzeugen mit einer Kraftschlußbeanspruchung, die im Fahrbetrieb wesentlich höher ist als im Bremsbetrieb, besteht im Fahrbetrieb wegen der erhöhten Gefahr der Überbeanspruchung der Räder sowohl die Notwendigkeit als auch die Möglichkeit, durch geeignete Beeinflussung der Schlupfgeschwindigkeit die Räder zu schützen.

Die der Erfindung zugrundeliegende Aufgabe besteht demzufolge darin, ein System zur Ermittlung und Vorgabe geeigneter Stellgrößen für die Antriebs- und Bremsensteuerung eines Schienenfahrzeuges anzugeben, das die Räder gegen thermische und mechanische Beanspruchungen schützt, die speziell aus dem Wärmeeintrag durch Schlupfleistung resultieren.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß die durch Radschlupf bedingten Beanspruchungen der angetriebenen bzw. gebremsten Räder eines schienengebundenen Fahrzeuges auf tolerierbare Werte begrenzt werden.

Diese Aufgabe wird bei bisher bekannten Fahrzeugen, wenn überhaupt dann durch Teilfunktionen der Radschlupf-Regeleinrichtung wahrgenommen. Die Hauptaufgabe von Radschlupf-Regeleinrichtungen besteht jedoch darin, den Radschlupf auf einen fest vorgegebenen Wert zu begrenzen bzw. einen solchen Radschlupf einzustellen, bei dem der größtmögliche Kraftschluß erwartet wird. Weitere Zusatzfunktionen können darin bestehen, das Auftreten von Eigenschwingungen im Antriebsstrang zu erkennen und, falls erforderlich, durch geeignete Radschlupf-Führung zu vermeiden oder beispielsweise durch Modulation des Antriebsmomentes aktiv zu bedämpfen. Diese Maßnahmen sind bedeutungsvoll für den Schutz von drehmomentübertragenden Gliedern der Antriebsanlagen. Die Beanspruchungen der Radlaufflächen und der Radkränze werden jedoch nicht getrennt berücksichtigt, vielmehr besteht ein Schutz gegen Überbeanspruchungen lediglich dahingehend, daß, auf Erfahrungen basierend, bestimmte Maximalwerte für den prozentualen Radschlupf und/oder die Schlupfgeschwindigkeit der Räder eingehalten werden. Ein meßtechnischer Nachweis der mit dieser Einstellung verbundenen Begrenzung der maximalen Radbeanspruchung wird dabei nicht geleistet.

Die mit der Erfindung erzielbaren Vorteile bestehen deshalb darin, daß eine wesentliche Verbesserung der Begrenzung der thermischen und mechanischen Radbeanspruchungen auf regelungstechnisch gebildete Höchstwerte erzielt wird. Beispielsweise werden Schäden an Radkränzen vermieden, welche auf zu hohe Reibleistung und zu hohe Momentanwerte der Radlaufflächentemperaturen zurückzuführen sind.

Anstelle einer offenen Wirkungskette wird ein geschlossener Regelkreis eingesetzt und zur Erfassung der tatsächlichen Radbeanspruchung werden dem Regler dieses Regelkreises geeignete Meßgrößen zugeführt. Die gebildeten Höchstwerte sind nicht einheitlich für alle Betriebsbedingungen, sondern basieren auf Meßgrößen, welche die gerade vorliegenden individuellen Betriebsbedingungen erfassen. Auf diese Weise wird beispielsweise erfaßt, daß der Wärmeeintrag durch Radschlupf zu einer Temperaturverteilung führt, die stark von der Umfangsgeschwindigkeit des Rades abhängig ist. Bei hoher Geschwindigkeit ist die Temperatur längs des Radumfanges gleichförmiger verteilt als bei kleiner Geschwindigkeit, bei der die Erwärmung quasi punktuell erfolgt.

Deshalb ist der ohne Schädigung ertragbare Wärmeeintrag eine Funktion der Geschwindigkeit. Das gleiche gilt für die durch Konvektion abgeführte Wärmemenge, die mit zunehmender Geschwindigkeit größer wird.

Die Schlupfregelung einer Lokomotive wird hierdurch erweitert, indem die Schlupfregelung die Funktion eines Stellgliedes übernimmt, dem ein geeigneter SchlupfSollwert vorzugeben ist. Gleichzeitig kann der Radbeanspruchungsbegrenzer aber auch in Fällen geringer Reibung vorteilhaft eingesetzt werden, um durch Ausschöpfung der zusätzlichen Grenzbeanspruchung den größtzulässigen Radschlupf vorzugeben, um auf diese Weise auch die größtmögliche Zugkraft zu erzielen. Auf diese Weise wird einerseits ein effektiver Schutz der Räder geleistet, andererseits gleichzeitig eine größtmögliche Adhäsionsausnutzung erreicht.

Die Erfindung wird nachstehend anhand der in der Zeichnung dargestellten Ausführungsbeispiele erläutert. Es zeigen:

Fig. 1    ein System mit Einrichtung zur Begrenzung der Radbeanspruchung,

Fig. 2    ein System mit Zuführung der Stellgröße an die Radschlupfregelung,

Fig. 3    ein System mit zusätzlicher Stellgrößenauswahl,

Fig. 4    ein System mit zusätzlichen Anforderungs- und Rückmeldungssignalen,

Fig. 5 die Signalführung innerhalb eines Sollwertgebers am Beispiel des Radbeanspruchungsbegrenzers.

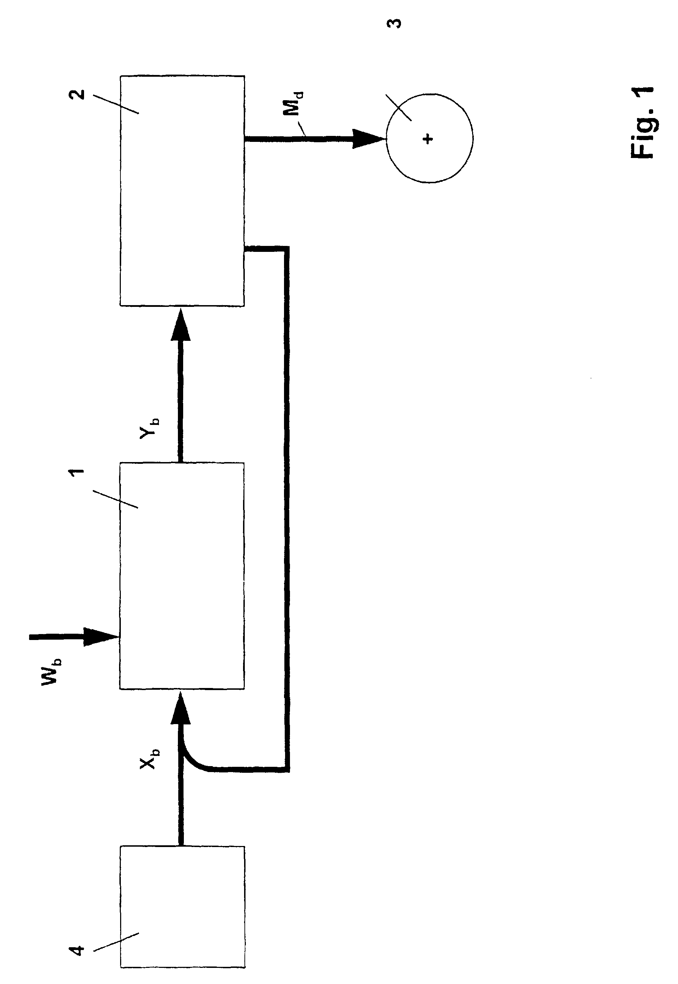

In Fig. 1 ist ein System mit Einrichtung zur Begrenzung der Radbeanspruchung dargestellt. Es ist ein Radbeanspruchungsbegrenzer 1 zu erkennen, der eine Stellgröße $Y_b$ für die Beeinflussung der Antriebs- bzw. Bremsensteuerung (= Sollwert) an eine Antriebs- bzw. Bremsensteuerung 2 des Schienenfahrzeuges abgibt. Die Antriebs- bzw. Bremsensteuerung 2 gibt dementsprechend ein Antriebs- bzw. Bremsmoment $M_d$ für ein angetriebenes oder gebremstes Rad 3 (bzw. für mehrere Räder) des Schienenfahrzeuges vor. Als Eingangssignale liegen dem Radbeanspruchungsbegrenzer 1 Meßgrößen $X_b$ zur Erfassung der Radbeanspruchung an, welche beispielsweise als Istwerte von Sensoren 4 zur Messung von Radbeanspruchungsgrößen gebildet werden. Des weiteren werden dem Radbeanspruchungsbegrenzer 1 Grenzwerte $W_b$ für die zulässige Radbeanspruchung zugeleitet.

Wesentlich bei dem vorgeschlagenen System zur Begrenzung von radschlupf-bedingten Beanspruchungen der angetriebenen bzw. gebremsten Räder eines schienengebundenen Fahrzeuges ist, daß durch Vorgabe von Radbeanspruchungskriterien Meßgrößen $X_b$ zur Beschreibung der Radbeanspruchung definiert sind und die Antriebs- bzw. Bremsensteuerung 2 des Fahrzeuges Stellgrößen aufweist, die einer Steuerbarkeitsbedingung genügen, die dahingehend lautet, daß bei signifikanten Änderungen der Stellgrößen der Änderungsrichtung der Stellgröße die Änderungsrichtung der Radbeanspruchung eindeutig zugeordnet ist, wobei diese Zuordnung für alle Arbeitspunkte mit einem von Null verschiedenen Radschlupf gilt, während bei vernachlässigbar kleinen Änderungen der Stellgrößen sich die Radbeanspruchung zwar mit beliebiger Änderungsrichtung, aber nur um vernachlässigbar kleine Beträge ändern kann.

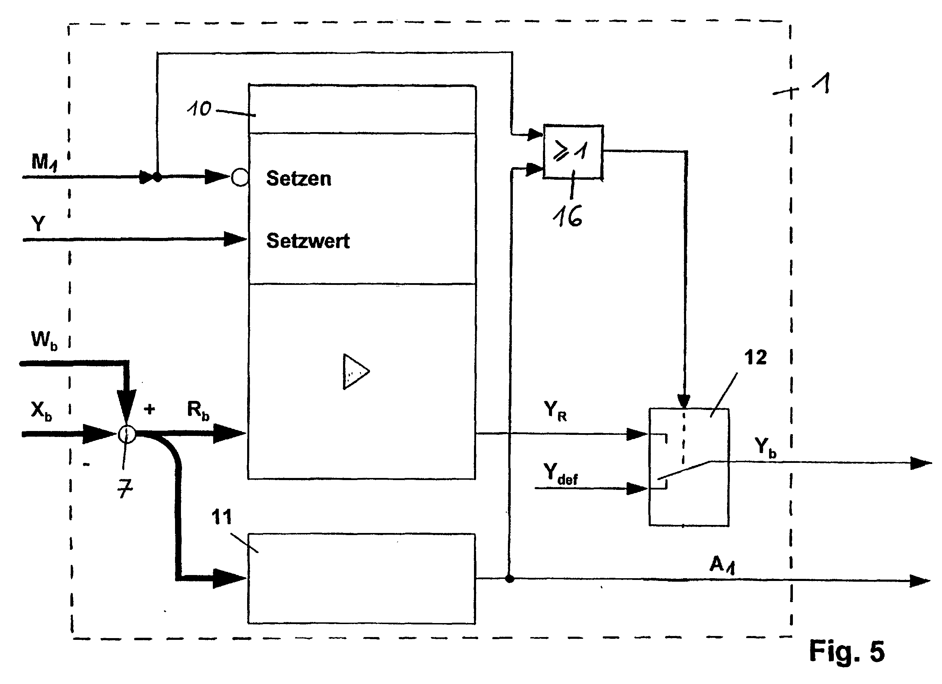

Ferner ist es wesentlich, daß auf dem Fahrzeug Meßgrößen $X_b$ zur Beschreibung der Radbeanspruchung verfügbar sind, daß ein Radbeanspruchungsbegrenzer 1 einen oder mehrere Eingänge für diese Meßgrößen $X_b$ aufweist, mit denen die Radbeanspruchung erfaßt wird, daß zu den Meßgrößen $X_b$ zugehörige Grenzwerte $W_b$ vorgegeben werden und daß der Radbeanspruchungsbegrenzer 1 einen Regler (siehe Ziffer 10 in Fig. 5) von beliebigem Typ aufweist, welcher die Radbeanspruchung auf die vorgegebenen Grenzwerte $W_b$ begrenzt und welcher die Stellgrößen $Y_b$ bildet, die für die Ansteuerung der Antriebs- bzw. Bremsensteuerung 2 erforderlich sind.

Die Meßgrößen $X_b$ zur Erfassung der Radbeanspruchung können der Antriebs- bzw. Bremsensteuerung 2 selbst entnommen werden oder werden direkt als Istwerte von Sensoren 4 gebildet. Zum Beispiel können als Sensoren 4 zur Messung der Radbeanspruchung Meßgeber für die Radlaufflächentemperatur eingesetzt werden.

Allgemein kann zur Bildung von Meßgrößen $X_b$ zur Beschreibung der Radbeanspruchung eine beliebige Kombination aus folgenden Signalen benutzt werden: Laufflächentemperatur, Zug- bzw. Bremskraft, Schlupfgeschwindigkeit des Rades, prozentualer Schlupf des Rades, Traktionsleistung des Rades, schlupfbedingte Reibleistung des Rades, auf die Radumfangsgeschwindigkeit bzw. Fahrgeschwindigkeit bezogene schlupfbedingte Reibleistung des Rades. Diese Signale können nur von einem Rad oder von mehreren ausgewählten Rädern oder von allen Rädern des Fahrzeuges herangezogen werden.

Im allgemeinen wird jedoch angestrebt, ganz oder zumindest teilweise auf zusätzliche Sensoren 4 zu verzichten. Dann ist es erforderlich, eine oder mehrere Meßgrößen $X_b$ durch einen Beobachter - Nachbildung in einem Modell, das die physikalisch relevanten Prozesse abbildet und dementsprechend die Meßgröße bildet - zu schätzen, wobei anstelle der über Sensoren 4 erfaßten Meßgrößen andere Meßgrößen dem Radbeanspruchungsbegrenzer 1 zugeführt werden. Die dem Beobachter zugeführten Meßgrößen müssen dabei so gewählt werden, daß für die Beanspruchungsmeßgröße, die von dem Beobachter geschätzt werden soll, die Bedingung der Beobachtbarkeit erfüllt ist.

Beispielsweise kann die Laufflächentemperatur in der Kontaktzone durch einen Beobachter geschätzt werden, dem als Meßgrößen die aktuelle Fahrgeschwindigkeit, die zugeführte Wärmeleistung und die Umgebungstemperatur zugeleitet werden.

Die Grenzwerte $W_b$ für die zulässige Radbeanspruchung werden nicht immer in Form von konstanten Werten vorgegeben. Statt dessen können sie zum Beispiel Funktionen der Temperatur, der Fahrgeschwindigkeit oder der Wirksamkeit einer vorhandenen Klotzbremse sein. Mit anderen Worten können ein oder mehrere Grenzwerte $W_b$ für die Radbeanspruchung Funktionen von Meßgrößen oder davon abgeleiteten Größen sein.

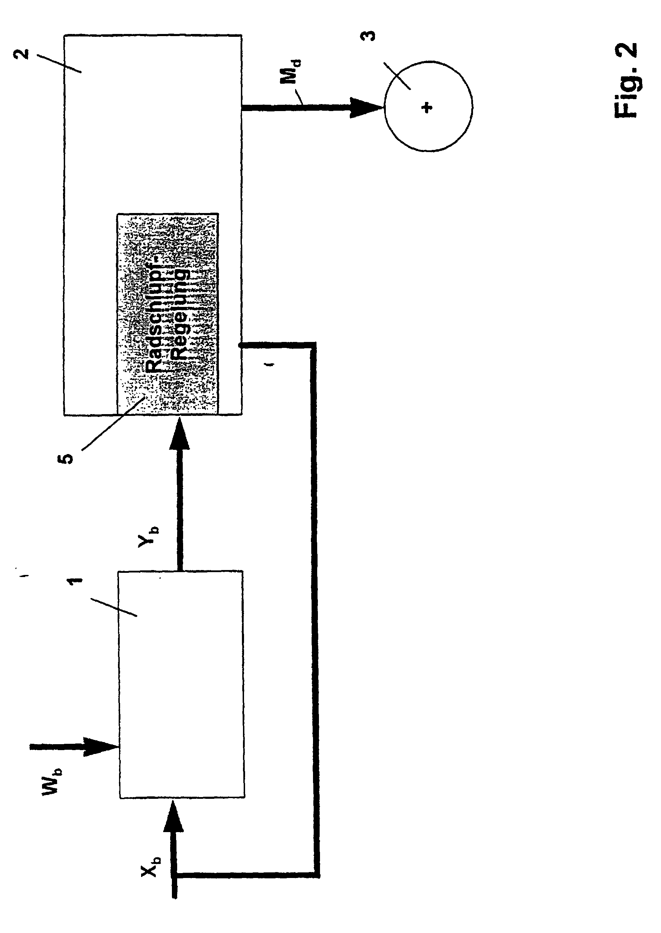

Wie bereits dargelegt, wird die Radbeanspruchung im wesentlichen durch die Schlupfleistung bestimmt. Bezüglich der Schlupfleistung erfüllen die Schlupfgeschwindigkeit oder der prozentuale Radschlupf die vorstehend genannte Steuerbarkeitsbedingung. Deshalb ist es zweckmäßig, als Stellgröße $Y_b$ für die. Beanspruchungsbegrenzung einen Sollwert für die Schlupfgeschwindigkeit bzw. den prozentualen Radschlupf zu benutzen. Diese Stellgröße kann dann mit einem diesbezüglichen Eingang der Radschlupfregelung (siehe Ziffer 5 in Fig. 2) verbunden werden, die in diesem Zusammenhang als Bestandteil der Antriebsbzw. Bremsensteuerung 2 angesehen wird.

In Fig. 2 ist hierzu eine Schaltung mit Zuführung der Stellgröße $Y_b$ des Radbeanspruchungsbegrenzers 1 an die Radschlupfregelung 5 gezeigt.

Allgemein bekannte Radschlupf-Regeleinrichtungen beinhalten oft eigene Sollwertgeber-Einrichtungen zur Vorgabe der Schlupfgeschwindigkeit oder des prozentualen Radschlupfes im Hinblick auf die Erzielung eines größtmöglichen Kraftschlusses. Ein solcher Sollwertgeber kann z.B. durch ein Verfahren zur selbständigen Ermittlung des optimalen Radschlupfes gebildet werden. Die erfindungsgemäße Einrichtung zur Begrenzung der Radbeanspruchung stellt ebenfalls einen solchen Sollwertgeber dar.

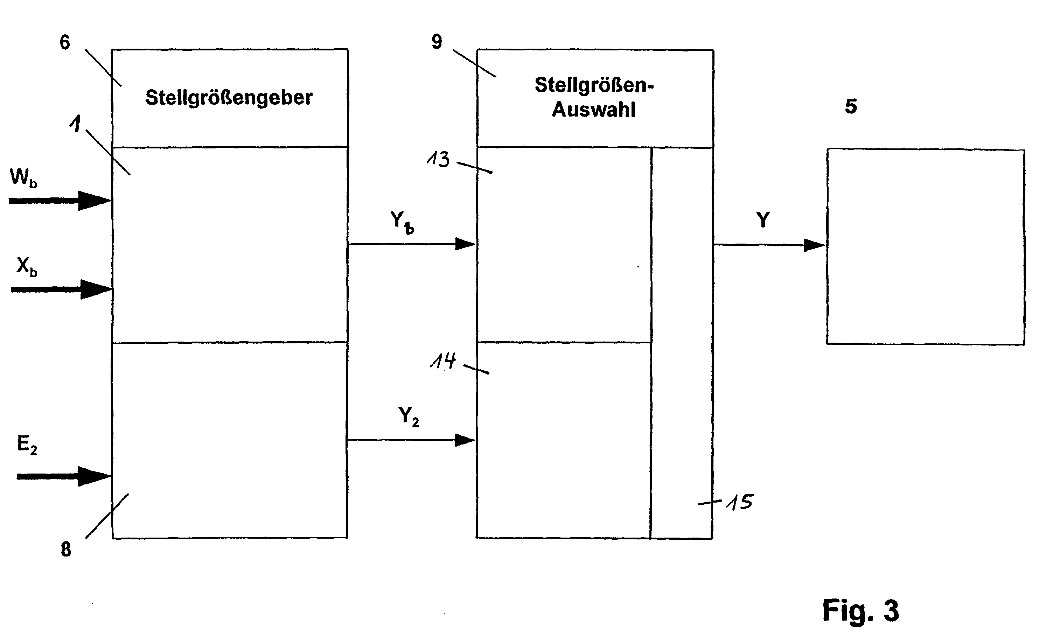

Damit ergibt sich das Problem, den momentan am besten geeigneten Sollwert für die Radschlupfregelung aus mehreren Größen auszuwählen. In Fig. 3 ist dazu ein System mit einer zusätzlichen Stellgrößenauswahl dargestellt. Es ist ein Stellgrößengeber 6 (= Sollwert-Gebereinrichtung mit zwei Sollwertgebern) zu erkennen, welcher als ersten Sollwertgeber zur Begrenzung der Radbeanspruchung den Radbeanspruchungsbegrenzer 1 sowie einen zweiten Sollwertgeber 8 zur Einstellung des optimalen Radschlupfes (= Optimalschlupfgeber) aufweist. Dem Radbeanspruchungsbegrenzer 1 liegen eingangsseitig die Grenzwerte $W_b$ sowie die Meßgrößen $X_b$ an, ausgangsseitig gibt er den Sollwert $Y_b$ ab (= erste Stellgröße). Dem Sollwertgeber 8 liegen eingangsseitig Eingangssignale $E_2$ (= Signale einer Radschlupf-Regeleinrichtung) an, ausgangsseitig gibt der Sollwertgeber 8 den Sollwert $Y_2$ (= zweite Stellgröße) ab. Diese Sollwerte $Y_b$ bzw. $Y_2$ werden einem ersten Kanal 13 bzw. einem zweiten Kanal 14 einer Stellgrößenauswahl 9 (= Sollwert-Auswahleinrichtung mit zwei Kanälen) zugeführt. Einer der Sollwerte $Y_b$ oder $Y_2$ wird von Kanälen 13, 14 über eine Ausgangsstufe 15 als aktive Stellgröße Y, d.h. als Sollwert für die Radschlupfregelung 5 durchgeschaltet.

Fig. 3 zeigt beispielhaft eine Variante mit lediglich zwei Kanälen hinsichtlich Stellgrößengeber 6 und Stellgrößenauswahl 9, jedoch können außer den beiden Sollwertgebern 1, 8 noch weitere Sollwertgeber vorhanden sein, deren Ausgänge fallweise mit dem Sollwerteingang der Radschlupfregelung 5 zu verbinden sind, wobei die Sollwertauswahl durch die Stellgrößenauswahl 9 vorgenommen wird, die die erforderliche Anzahl von Kanälen mit je einem Eingang von einem der fallweise weiterzuleitenden Sollwerte und einem gemeinsamen Ausgang für den weiterzugebenden Sollwert aufweist.

Vorzugsweise wird zur Sollwertauswahl von allen vorgegebenen Sollwerten $Y_b$, $Y_2$... gemäß dem Maximalwert-Prinzip der größte Sollwert ausgewählt und durchgeschaltet, wenn im Sinne der Steuerbarkeitsbedingung der positiven Sollwertänderung eine Verringerung der Radbeanspruchung zugeordnet ist und es wird gemäß dem Minimalwert-Prinzip der kleinste Sollwert ausgewählt und durchgeschaltet, wenn im Sinne der Steuerbarkeitsbedingung der negativen Sollwertänderung eine Verringerung der Radbeanspruchung zugeordnet ist.

Der Sollwert für die Schlupfgeschwindigkeit bzw. für den prozentualen Radschlupf erfüllt die Steuerbarkeitsbedingung in der Weise, daß eine positive Änderung des Sollwertes eine positive Änderung der Radbeanspruchung zur Folge hat. Deshalb ist es in diesem Fall zweckmäßig, als Verfahren zur Sollwertauswahl das Minimalwert-Prinzip einzusetzen.

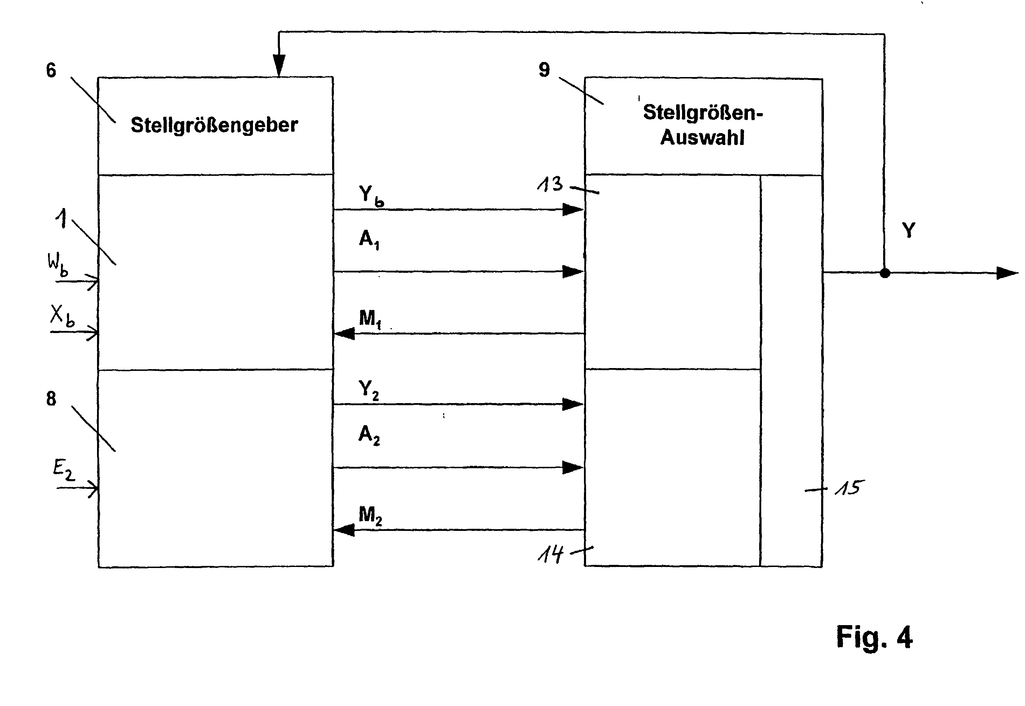

Dabei weist die Stellgrößenauswahl 9 vorzugsweise zusätzlich einen oder mehrere Ausgänge auf, über die binäre Rückmeldesignale (siehe $M_1$, $M_2$ in Fig. 4) zur Kennzeichnung des aktuellen ausgewählten Kanals und/oder über die der Wert des durchgeschalteten Sollwerts an die verschiedenen Sollwertgeber zurückgeführt werden. Vorzugsweise erfolgt innerhalb von mindestens einem Sollwertgeber die Sollwertbildung abhängig davon, ob der abgegebene Sollwert von der Stellgrößenauswahl 9 durchgeschaltet worden ist oder nicht.

Vorzugsweise erfolgt die Sollwertbildung in mindestens einem Sollwertgeber 1, 8 derart, daß bei nicht von der Stellgrößenauswahl 9 durchgeschaltetem Sollwert der abgegebene Sollwert auf den minimal zulässigen Sollwert gesetzt wird, wenn bei der Kanalauswahl das Maximalwert-Prinzip angewendet wird und auf den maximal zulässigen Sollwert gesetzt wird, wenn bei der Kanalauswahl das Minimalwert-Prinzip angewendet wird.

Zweckmäßig ist es auch, wenn die Stellgrößenauswahl 9 zusätzlich einen oder mehrere Eingänge für folgende Signalarten zur Kanalauswahl aufweist: einen Eingang zur Vorgabe der Nummer des durchzuschaltenden Kanals (Kanalnummerneingabe) und/oder Eingänge für binäre Anforderungssignale (siehe $A_1$, $A_2$ in Fig. 4), die jeweils einem bestimmten Kanal zugeordnet sind.

Bei Vorgabe einer existierenden Kanalnummer über die Kanalnummerneingabe wird der durch diese Nummer bestimmte Kanal durchgeschaltet. Ist keine Kanalnummer vorgegeben, erfolgt die Kanalwahl nach Maßgabe der binären Anforderungssignale, wobei die Abfrage der binären Anforderungssignale zur Kanalauswahl in Reihenfolge abnehmender Priorität erfolgt, so daß bei Vorliegen von mindestens einem solchen Anforderungssignal von den angeforderten Kanälen derjenige mit der höchsten Priorität ausgewählt wird. Anderenfalls erfolgt die Kanalwahl nach dem Minimalwert- bzw. Maximalwert-Prinzip.

Den Kanälen für die Sollwerte zur Begrenzung der Radbeanspruchung ist vorzugsweise eine höhere Priorität zugeordnet als den übrigen Kanälen.

Vorzugsweise werden die binären Anforderungssignale für einen oder mehrere Kanäle von den zugehörigen Sollwertgebern 1, 8 abgegeben.

Hinsichtlich der Kanalanforderung eines Sollwertgebers zur Begrenzung der Radbeanspruchung gilt, daß durch Vergleich der zulässigen Radbeanspruchung mit der gemessenen Radbeanspruchung ein kritischer Radbeanspruchungszustand erkannt wird und daß bei Vorliegen eines solchen Zustands ein Anforderungssignal zum Durchschalten des betreffenden Kanals abgegeben wird.

Im Falle des Sollwertgebers 1 zur Begrenzung der Radbeanspruchung gilt, daß er Bestandteil eines geschlossenen Regelkreises ist, wenn der von ihm gebildete Sollwert von der Stellgrößenauswahl 9 auf die Radschlupfregelung 5 wirkt. Für den Fall, daß die Radbeanspruchung weit unterhalb der zulässigen Grenzbeanspruchung liegt, kann der Sollwert $Y_2$ für die Einstellung des optimalen Schlupfes geringer sein als der Sollwert $Y_b$ für die Begrenzung der Radbeanspruchung. Dann wird nach dem Mimimalwert-Prinzip der Sollwert $Y_2$ durchgeschaltet und der Regelkreis zur Begrenzung der Radbeanspruchung mit dem Radbeanspruchungsbegrenzer 1 wird aufgeschnitten. Weist der Regler des Radbeanspruchungsbegrenzers 1 einen integrierenden Anteil in einer Regelcharakteristik auf, wird der Sollwert $Y_b$ dann nach einiger Zeit die obere Stellgrößengrenze erreichen. Wird dann die Radbeanspruchung kritisch, kann der Radbeanspruchungsbegrenzer 1 nicht sofort die Vorgabe des Sollwertes für die Radschlupfregelung 5 übernehmen, sondern es verstreicht erst eine Zeitspanne, bis der Sollwert $Y_b$ kleiner ist als der Sollwert $Y_2$. Während dieser Zeitspanne wird das Rad nicht vor Überbeanspruchung geschützt.

In Fig. 4 ist zur Erläuterung der vorstehenden Ausführungen eine Anordnung mit zusätzlichen Anforderungs- und Rückmeldungssignalen dargestellt. Wie zu erkennen ist, gibt der Sollwertgeber 1 zusätzlich zum Sollwert $Y_b$ ein binäres Anforderungssignal $A_1$ "ersten Kanal anfordern" an den Kanal 13 ab, während der Kanal 13 zusätzlich ein binäres Rückmeldesignal $M_1$ "erster Kanal aktiv" zur Kennzeichnung des durchgeschalteten Zustands des Kanals an den Sollwertgeber 1 abgibt. In gleicher Art und Weise gibt der Sollwertgeber 8 zusätzlich zum Sollwert $Y_2$ ein binäres Anforderungssignal $A_2$ "zweiten Kanal anfordern" an den Kanal 14, während der Kanal 14 zusätzlich ein binäres Rückmeldesignal $M_2$ "zweiter Kanal aktiv" zur Kennzeichnung des durchgeschalteten Zustands des Kanals an den Sollwertgeber 8 abgibt. Die momentan aktive Stellgröße Y wird der Radschlupfregelung 5 und beiden Sollwertgebern 1, 8 des Stellgrößengebers 6 zugeführt.

Bei der Kanalauswahl innerhalb der Stellgrößenauswahl 9 ist dem Kanal 13 eine höhere Priorität als dem Kanal 14 zugeordnet. Dann wird bei gleichzeitigem Vorliegen beider Anforderungssignale $A_1$, $A_2$ der Kanal 13 durchgeschaltet, ist nur ein Anforderungssignal $A_1$ oder $A_2$ aktiv, wird der betreffende Kanal ausgewählt, liegt kein Anforderungssignal vor, wird die Auswahl nach dem Minimalwert-Prinzip vorgenommen.

In Fig. 5 ist die Signalführung innerhalb eines Sollwertgebers dargestellt, und zwar am Beispiel des Radbeanspruchungsbegrenzers 1. Der Radbeanspruchungsbegrenzer 1 weist einen Radbeanspruchungsregler 10 mit vorgeschalteter Subtraktionsstelle 7, eine Kanalanforderung 11, einen Auswahlschalter 12 und ein ODER-Gatter 16 auf. Die Subtraktionsstelle 7 bildet eine Radbeanspruchungsreserve $R_b$ gemäß

$$R_b = W_b - X_b$$

und führt diese dem Radbeanspruchungsregler 10 und der Kanalanforderung 11 zu. Dem Radbeanspruchungsregler 10 liegen eingangsseitig ferner das Rückmeldesignal $M_1$ und die momentan aktive Stellgröße Y an. Der Radbeanspruchungsregler 10 bildet eine Stellgröße $Y_r$ (in Abhängigkeit von $R_b$, $M_1$ und Y) als Reglerausgangssignal und leitet diese dem ersten Eingang des Auswahlschalters 12 zu. Dem zweiten Eingang des Auswahlschalters 12 liegt ein Ersatz-Sollwert $Y_{def}$ für den abzugebenden Sollwert im Falle des aufgeschnittenen Regelkreises (wenn die Stellgrößenauswahl 9 die Stellgröße $Y_b$ nicht durchschaltet) an. Ausgangsseitig gibt der Auswahlschalter 12 entweder $Y_r$ oder $Y_{def}$ als Stellgröße ab. Die Ansteuerung des Auswahlschalters 12 erfolgt durch das ODER-Glied 16 - dem M1 und A1 eingangsseitig anliegen und das ausgangsseitig den Auswahlschalter 12 ansteuert - immer dann, wenn das Anforderungssignal $A_1$ und/oder das Rückmeldungssignal $M_1$ aktiv ist. Bei aktiver Ansteuerung schaltet der Auswahlschalter 12 das Reglerausgangssignal $Y_R$ durch.

Wird der abgegebene Sollwert Yb von der Stellgrößenauswahl 9 nicht durchgeschaltet, so wird durch das Rückmeldesignal $M_1$ das Reglerausgangssignal $Y_r$ des Radbeanspruchungsreglers 10 auf dem Wert des aktiven Sollwerts Y gehalten. Ist der durch $R_b$ definierte Radbeanspruchungszustand unkritisch, wird durch den Auswahlschalter 12 der Ersatz-Sollwert $Y_{def}$ als Stellgröße $Y_b$ weitergeleitet. Als Wert von $Y_{def}$ wird zweckmäßig der Wert der oberen Stellgrößengrenze (maximal zulässiger Sollwert) benutzt, so daß damit $Y_b$ nach dem Minimalwert-Prinzip nicht ausgewählt wird.

Nähert sich die Radbeanspruchungsreserve $R_b$ dem Wert Null, wird die Radbeanspruchung kritisch. Die Kanalanforderung 11 gibt dann über das Anforderungssignal $A_1$ eine Anforderung zur Sollwert-Durchschaltung ab. Gleichzeitig wird jetzt durch den Auswahlschalter 12 das Reglerausgangssignal $Y_R$ als Stellgröße $Y_b$ weitergeleitet. Durch die zu diesem Zeitpunkt noch vorgenommene Initialisierung des Radbeanspruchungsreglers 10 hat damit die Stellgröße $Y_b$ den selben Wert wie die gerade aktive Stellgröße Y. Wird jetzt aufgrund des abgegebenen Anforderungssignals A1 die Stellgröße $Y_b$ von der Stellgrößenauswahl 9 durchgeschaltet, erfolgt der Übergang zwischen einem anderen Sollwert, beispielsweise $Y_2$ und dem Sollwert $Y_b$ des Radbeanspruchungsbegrenzers 1 stetig, d.h. ohne Sprung im Verlauf der aktiven Stellgröße Y. Da über das Rückmeldesignal $M_1$ nun der abgegebene Sollwert $Y_b$ aktiv gemeldet wird (der Regelkreis mit dem Radbeanspruchungsbegrenzer 1 ist geschlossen), wird der Initialisierungszustand des Radbeanspruchungsreglers 10 aufgehoben und der Regler 10 kann frei arbeiten. Auf diese Weise kann vorteilhaft bei kritisch werdendem Radbeanspruchungszustand die Regelung zum Schutz gegen Überbeanspruchung sofort wirksam werden.

Auch wenn das Anforderungssignal $A_1$ in den inaktiven Zustand zurückkehren sollte, wird abhängig vom Rückmeldungssignal $M_1$ das Reglerausgangssignal $Y_R$ von dem Auswahlschalter 12 durchgeschaltet, bis schließlich durch die Anforderung eines anderen Kanals oder nach Maßgabe des Minimalwertprinzips ein anderer Stellgrößenkanal aktiv geschaltet wird und damit das Rückmeldungssignal $M_1$ auch inaktiv wird.

Zum Nachweis der Wirksamkeit der Begrenzung der Radbeanspruchung wird auf mindestens ein Radbeanspruchungskriterium während des regulären Betriebseinsatzes des Fahrzeuges verzichtet (verzichtbares Kriterium), und dieses verzichtbare Kriterium wird durch mindestens ein anderes, immer wirksames Kriterium ersetzt (Ersatz-Kriterium), dessen Beanspruchungsmeßgröße immer verfügbar ist. Die Einhaltung des Grenzwertes des verzichtbaren Kriteriums wird durch geeignete Wahl der Grenzwerte für die Ersatzkriterien erreicht und durch Messungen am Fahrzeug nachgewiesen, indem die Radbeanspruchungsmeßgröße des verzichtbaren Kriteriums durch vorübergehend installierte Meßwertgeber gemessen und mit der jeweils zulässigen Radbeanspruchung verglichen wird.

**Patentansprüche**

1. System zur Ermittlung und Vorgabe geeigneter Stellgrößen für die Antriebs- und Bremsensteuerung eines Schienenfahrzeuges unter Einsatz einer Antriebs- bzw. Bremsensteuerung (2) mit Radschlupfregelung (5), deren Stellgröße von mindestens einem ersten Sollwertgeber (8) vorgegeben wird, **dadurch gekennzeichnet,**

   - **dass** ein Radbeanspruchungsbegrenzer (1) mit einem Radbeanspruchungsregler (10) vorgesehen ist, wobei dem Radbeanspruchungsbegrenzer (1) eingangsseitig mindestens eine Messgröße ($X_b$) zur Erfassung der Radbeanspruchung sowie mindestens ein Grenzwert ($W_b$) für die zulässige Radbeanspruchung zuleitbar sind und der Radbeanspruchungsregler (10) die Radbeanspruchung auf den mindestens einen Grenzwert begrenzt und eine weitere Stellgröße ($Y$, $Y_b$, $Y_R$) zur Beeinflussung der Antriebs- und Bremsensteuerung (2) bildet und
   - **dass** eine Stellgrößenauswahl (9) mit mindestens zwei Kanälen (13, 14) vorgesehen ist, die eingangsseitig außer dem Sollwert des Radbeanspruchungsbegrenzers (1) mindestens einen weiteren Sollwert des mindestens einen ersten Sollwertgebers (8) zur optimalen Einstellung des Radschlupfes empfängt, eine Sollwert-Auswahl vornimmt und ausgangsseitig den ausgewählten Sollwert an die Radschlupfregelung (5) abgibt.

2. System nach Anspruch 1, **dadurch gekennzeichnet, dass** mindestens eine Messgröße ($X_b$) zur Erfassung der Radbeanspruchung durch einen Sensor (4) gebildet wird.

3. System nach Anspruch 1, **dadurch gekennzeichnet, dass** mindestens eine Messgröße ($X_b$) zur Erfassung der Radbeanspruchung durch einen Beobachter geschätzt wird, welcher eine Beobachtung der Radbeanspruchung gewährleistet.

4. System nach mindestens einem der vorstehenden Ansprüche 1 bis 3, **dadurch gekennzeichnet, dass** als Messgröße ($X_b$) die Temperatur der Radlauffläche und/oder die Zug- bzw. Bremskraft und/oder die Schlupfgeschwindigkeit und/oder der prozentuale Schlupf und/oder die Traktionsleistung und/oder die schlupfbedingte Reibleistung und/oder die auf die Radumfangsgeschwindigkeit bzw. Fahrgeschwindigkeit bezogene schlupfbedingte Reibleistung herangezogen wird.

5. System nach mindestens einem der vorstehenden Ansprüche 1 bis 4, **dadurch gekennzeichnet, dass** mindestens ein Grenzwert ($W_b$) für die zulässige Radbeanspruchung eine Funktion einer weiteren Messgröße ($X_b$) oder eine davon abgeleitete Größe ist.

6. System nach mindestens einem der vorstehenden Ansprüche 1 bis 5, **dadurch gekennzeichnet, dass** die Stellgrößenauswahl (9) Rückmeldesignale (M1, M2) zur Rückmeldung des Kanals (13, 14) des aktuell an die Radschlupfregelung (5) durchgeschalteten Sollwerts an den Radbeanspruchungsbegrenzer (1) und den mindestens einen ersten Sollwertgeber (8) abgibt.

7. System nach Anspruch 6, **dadurch gekennzeichnet, dass** der Wert des aktuell an die Radschlupfregelung (5) durchgeschalteten Sollwerts an den Radbeanspruchungsbegrenzer (1) und den mindestens einen ersten Sollwertgeber (8) rückgemeldet wird.

8. System nach Anspruch 6 oder 7, **dadurch gekennzeichnet, dass** die Sollwertbildung innerhalb des Radbeanspruchungsbegrenzers (1) oder des mindestens einen ersten Sollwertgebers (8) in Abhängigkeit davon erfolgt, ob der vorgegebene Sollwert von der Stellgrößenauswaht (9) durchgeschaltet worden ist.

9. System nach mindestens einem der Ansprüche 6 bis 8, **dadurch gekennzeichnet, dass** der Radbeanspruchungsbegrenzer (1) und/oder der mindestens eine erste Sollwertgeber (8) Anforderungssignale (A1, A2) an die Stellgrößenauswahl (9) abgeben, den vorgegebenen Sollwert durchzuschalten.

10. System nach Anspruch 9, **dadurch gekennzeichnet, dass** ein Anforderungssignal (A1, A2) abgegeben wird, wenn sich durch Vergleich der zulässigen Radbeanspruchung mit der durch mindestens eine Messgröße erfassten Radbeanspruchung ein kritischer Radbeanspruchungszustand ergibt.

11. System nach mindestens einem der Ansprüche 6 bis 10, **dadurch gekennzeichnet, dass** die Stellgrößenauswahl (9) gemäß dem Maximalwert-Prinzip den größten der vorgegebenen Sollwerte auswählt und durchschaltet, wenn eine positive Sollwertänderung eine Verringerung der Radbeanspruchung zur Folge hat und dass die Stellgrößenauswahl (9) gemäß dem Minimalwert-Prinzip den kleinsten der vorgegebenen Sollwerte auswählt und durchschaltet, wenn eine negative Sollwertänderung eine Verringerung der Radbeanspruchung zur Folge hat.

12. System nach Anspruch 11, **dadurch gekennzeichnet, dass** bei nicht von der Stellgrößenauswahl (9) durchgeschaltetem Sollwert der Radbeanspruchungsbegrenzer (1) und/oder der mindestens eine erste Sollwertgeber (8) auf den minimal zulässigen Sollwert gesetzt werden, wenn bei der Auswahl der Stellgrößenauswahl (9) das Maximalwert-Prinzip angewendet wird und auf den maximal zulässigen Sollwert gesetzt werden, wenn bei der Auswahl der Stellgrößenauswahl (9) das Minimalwert-Prinzip angewendet wird.

13. System nach mindestens einem der Ansprüche 6 bis 12, **dadurch gekennzeichnet, dass** die Stellgrößenauswahl (9) den Kanal (13, 14) auswählt, für den ein Anforderungssignal (A1, A2) vorliegt, wobei den Kanälen Prioritäten zugeordnet sind und die Sollwerte zur Begrenzung der Radbeanspruchung eine höhere Priorität aufweisen als die weiteren Sollwerte.

14. System nach Anspruch 13, **dadurch gekennzeichnet, dass** die Stellgrößenauswahl (9) gemäß dem Maximalwert-Prinzip oder Minimalwert-Prinzip den Kanal (13, 14) auswählt, wenn kein Anforderungssignal (A1, A2) vorliegt.

**Claims**

1. System for determining and presetting suitable manipulated variables for traction and brake control of a rail vehicle using a traction and brake controller (2) with wheel slip regulation (5), whose manipulated variable is pre-set by at least one first nominal value transmitter (8), **characterized**

   - **in that** a wheel load limiter (1) having a wheel load regulator (10) is provided, in which at least one measurement variable ($X_b$) for recording the wheel load and at least one limit value ($W_b$) for the maximum permissible wheel load can be supplied on the input side to the wheel load limiter (1), and the wheel load regulator (10) limits the wheel load to the at least one limit value, and forms a further manipulated variable (Y, $Y_b$, $Y_R$) in order to influence the traction and brake control (2), and
   - **in that** a manipulated variable selection (9) having at least two channels (13, 14) is provided which, on the input side, apart from the nominal value of the wheel load limiter (1) receives at least one further nominal value of the at least one first nominal value transmitter (8) for optimum setting of wheel slip, carries out a nominal value selection and, on the output side, emits the selected nominal value to the wheel slip regulation (5).

2. System according to Claim 1, **characterized in that** at least one measurement variable ($X_b$) is formed for detection of the wheel load by a sensor (4).

3. System according to Claim 1, **characterized in that** at least one measurement variable ($X_b$) is estimated for detection of the wheel load by an observer, which ensures observation of the wheel load.

4. System according to at least one of the preceding Claims 1 to 3, **characterized in that** the temperature of the wheel running surface and/or the traction or braking force and/or the slip rate and/or the percentage slip and/or the traction power and/or the slip-dependent friction power and/or the slip-dependent friction power related to the wheel circumference speed or speed of travel are/is used as measurement variable ($X_b$).

5. System according to at least one of the preceding Claims 1 to 4, **characterized in that** at least one limit value ($W_b$) for the maximum permissible wheel load is a function of a further measurement variable ($X_b$) or of a variable derived from it.

6. System according to at least one of the preceding Claims 1 to 5, **characterized in that** the manipulated variable selection (9) emits feedback signals (M1, M2) for feeding back the channel (13, 14) of the nominal value which is currently being passed to the wheel slip regulation (5) to the wheel load limiter (1) and to the at least one first nominal value transmitter (8).

7. System according to Claim 6, **characterized in that** the value of the nominal value which is currently being passed to the wheel slip regulation (5) is fed back to the wheel load limiter (1) and to the at least one first nominal value transmitter (8).

8. System according to Claim 6 or 7, **characterized in that** the nominal value formation is carried out within the wheel load limiter (1) or the at least one first nominal value transmitter (8) as a function of whether the predetermined nominal value has been passed on from the manipulated variable selection (9).

9. System according to at least one of Claims 6 to 8, **characterized in that** the wheel load limiter (1) and/or the at least one first nominal value transmitter (8) emit/emits request signals (A1, A2) to the manipulated variable selection (9) to pass on the predetermined nominal value.

10. System according to Claim 9, **characterized in that** a request signal (A1, A2) is emitted when a critical wheel load state is found from the comparison of the maximum permissible wheel load with the wheel load as detected by at least one measurement variable.

11. System according to at least one of Claims 6 to 10, **characterized in that** the manipulated variable selection (9) selects the largest of the predetermined nominal values on the maximum value principle and passes this on when a positive nominal value change results in a reduction in the wheel load and **in that** the manipulated variable selection (9) selects the smallest of the predetermined nominal values on the minimum value principle and passes this on when a negative nominal value change results in a reduction in the wheel load.

12. System according to Claim 11, **characterized in that**, when the nominal value is not passed on from the manipulated variable selection (9), the wheel load limiter (1) and/or the at least one first nominal value transmitter (8) are/is set to the minimum permissible nominal value when the maximum value principle is used in the selection of the manipulated variable selection (9) and is set to the maximum permissible nominal value when the minimum value principle is used in the selection of the manipulated variable selection (9).

13. System according to at least one of Claims 6 to 12, **characterized in that** the manipulated variable selection (9) selects that channel (13, 14) for which a request signal (A1, A2) is present, with the channels being allocated priorities, and the nominal values for limiting the wheel load having a higher priority than the other nominal values.

14. System according to Claim 13, **characterized in that** the manipulated variable selection (9) selects the channel (13, 14) on the maximum value principle, or the minimum value principle when no request signal (A1, A2) is present.

## Revendications

1. Système pour la détermination et l'établissement préalable de valeurs de réglage pour la commande de traction et de freinage d'un véhicule sur rail utilisant une commande de traction et de freinage (2) avec une régulation du glissement des roues (5), dont la valeur de réglage est prédéfinie par au moins un premier générateur de valeur de consigne (8), **caractérisé en ce qu'**

- un limiteur de sollicitation des roues (1) est pourvu d'un régulateur de sollicitation des roues (10), au moins une valeur de mesure ($X_b$) pour la détection de la sollicitation des roues ainsi qu'au moins une valeur limite ($W_b$) pour la sollicitation des roues admissible pouvant être acheminées du côté de l'entrée au limiteur de sollicitation des roues (1) et le régulateur de sollicitation des roues (10) limitant la sollicitation des roues à l'au moins une valeur limite et formant une autre valeur de réglage ($Y, Y_b, Y_R$) pour influencer la commande de traction et de freinage (2) et **en ce qu'**
- une sélection de valeurs de réglage (9) est prévue avec au moins deux canaux (13, 14), laquelle reçoit du côté de l'entrée en plus de la valeur de consigne du limiteur de sollicitation des roues (1) au moins une autre valeur de consigne de l'au moins un générateur de valeur de consigne (8) pour l'ajustage optimal du glissement des roues, effectue une sélection de la valeur de consigne et délivre du côté de la sortie la valeur de consigne sélectionnée à la régulation du glissement des roues (5).

2. Système selon la revendication 1, **caractérisé en ce qu'**au moins une valeur de mesure ($X_b$) est formée pour la détection de la sollicitation des roues par un capteur (4).

3. Système selon la revendication 1, **caractérisé en ce qu'**au moins une valeur de mesure ($X_b$) pour la détection de la sollicitation des roues est évaluée par un observateur qui garantit une observation de la sollicitation des roues.

**4.** Système selon au moins l'une des revendications 1 à 3, **caractérisé en ce que** l'on utilise comme valeur de mesure ($X_b$) la température de la surface de roulement des roues et/ou la force de traction ou de freinage et/ou la vitesse de glissement et/ou le pourcentage de glissement et/ou la puissance de traction et/ou la puissance de frottement causée par le glissement et/ou la puissance de frottement causée par le frottement par rapport à la vitesse périphérique des roues ou la vitesse d'avance.

**5.** Système selon au moins l'une des revendications 1 à 4, **caractérisé en ce qu'**au moins une valeur limite ($W_b$) pour la sollicitation des roues admissible est une fonction d'une autre valeur de mesure ($X_b$) ou est une valeur dérivée de celle-ci.

**6.** Système selon au moins l'une des revendications précédentes 1 à 5, **caractérisé en ce que** la sélection des valeurs de réglage (9) délivre des rétrosignaux (M1, M2) pour l'information en retour du canal (13, 14) de la valeur de consigne actuellement communiquée à la régulation du glissement des roues (5) au limitateur de sollicitation des roues (1) et à l'au moins un premier générateur de valeur de consigne (8).

**7.** Système selon la revendication 6, **caractérisé en ce que** la valeur de la valeur de consigne communiquée actuellement à la régulation du glissement des roues (5) est envoyée en retour au limitateur de sollicitation des roues (1) et à l'au moins un premier générateur de valeur de consigne (8).

**8.** Système selon la revendication 6 ou 7, **caractérisé en ce que** la formation de la valeur de consigne dans le limitateur de sollicitation des roues (1) ou dans l'au moins un premier générateur de valeur de consigne (8) s'effectue en fonction de la communication ou non de la valeur de consigne prédéfinie par la sélection des valeurs de régulation (9).

**9.** Système selon au moins l'une des revendications 6 à 8, **caractérisé en ce que** le limitateur de sollicitation des roues (1) et/ou l'au moins un premier générateur de valeur de consigne (8) délivrent des signaux de demande (A1, A2) à la sélection de valeurs de réglage (9), pour communiquer la valeur de consigne prédéfinie.

**10.** Système selon la revendication 9, **caractérisé en ce qu'**un signal de demande (A1, A2) est délivré, quand un état de sollicitation des roues critique s'établit par comparaison de la sollicitation des roues admissible avec la sollicitation des roues détectée par au moins une valeur de mesure.

**11.** Système selon au moins l'une des revendications 6 à 10, **caractérisé en ce que** la sélection des valeurs de réglage (9) sélectionne et communique la plus grande des valeurs de consigne prédéfinies selon le principe de la valeur maximale, quand une variation de valeur de consigne positive entraîne une réduction de la sollicitation des roues et **en ce que** la sélection des valeurs de réglage (9) sélectionne et communique la plus petite des valeurs de consigne prédéfinies en fonction du principe de valeur minimale quand une variation de valeur de consigne négative entraîne une réduction de la sollicitation des roues.

**12.** Système selon la revendication 11, **caractérisé en ce que** lorsque la valeur de consigne n'est pas communiquée par la sélection des valeurs de réglage (9), le limitateur de sollicitation des roues (1) et/ou l'au moins un premier générateur de valeur de consigne (8) sont mis à la valeur de consigne minimale admissible, quand, lors de la sélection par la sélection de la valeur de réglage (9), on applique le principe de la valeur maximale, et sont mis à la valeur de consigne maximale admissible quand, lors de la sélection par la sélection de la valeur de réglage (9), on applique le principe de la valeur minimale.

**13.** Système selon au moins l'une des revendications 6 à 12, **caractérisé en ce que** la sélection de la valeur de réglage (9) sélectionne le canal (13, 14) pour lequel un signal de demande (A1, A2) est présent, des priorités étant associées aux canaux et les valeurs de consigne présentant pour la limitation de la sollicitation des roues une priorité supérieure aux autres valeurs de consigne.

**14.** Système selon la revendication 13, **caractérisé en ce que** la sélection de la valeur de consigne (9) sélectionne le canal (13, 14) en fonction du principe de valeur maximale ou de valeur minimale quand il n'y a aucun signal de demande (A1, A2).

Fig. 1

Radschlupf-Regelung

$W_b$

$X_b$

$Y_b$

$M_d$

Fig. 2

EP 0 818 372 B1

**6**

**Stellgrößengeber**

**1**

$W_b$ →

$X_b$ →

$E_2$ →

**8**

$Y_b$ →

$Y_2$ →

**9**

**Stellgrößen-Auswahl**

**13**

**14**

**15**

**5**

$Y$ →

**Fig. 3**

Fig. 4

EP 0 818 372 B1

Fig. 5

Setzen
Setzwert

$M_1$
Y
$W_b$
$X_b$
$R_b$
$Y_R$
$Y_{def}$
$Y_b$
$A_1$

≥1

10
16
12
11
7